# EUROPEAN PATENT SPECIFICATION

(11) **EP 4 225 883 B1**
(45) Date of publication and mention of the grant of the patent: **22.01.2025**
(21) Application number: 21802886.8
(22) Date of filing: 08.10.2021
(51) Int. Cl.: C11D 17/04, B32B 7/12, B32B 27/10, B32B 27/36, B32B 29/00, C11D 17/06

(54) **PACKAGED LAUNDRY DETERGENT PRODUCT**
VERPACKTES WÄSCHEWASCHMITTELPRODUKT
PRODUIT DÉTERGENT DE BLANCHISSERIE EMBALLÉ

(30) Priority: 09.10.2020 US 202063089556 P
(43) Date of publication of application: 16.08.2023
(73) Proprietor: The Procter & Gamble Company, Cincinnati, OH 45202 (US)
(72) Inventor: BOSWELL, Emily, Charlotte, Cincinnati, Ohio 45202 (US); BRANCA, Andrea, 1853 Strombeek-Bever (BE); CORTEZ MIRANDA, Debora, 1853 Strombeek-Bever (BE); SAINT-IGNAN, Katy, 1853 Strombeek-Bever (BE); SCHOUBBEN, Jimmy, 1853 Strombeek-Bever (BE)
(74) Representative: P&G Patent Belgium UK
(86) International application number: PCT/US2021/071781
(87) International publication number: WO 2022/077022

(56) References cited:
- EP-A2- 1 193 294
- EP-A2- 3 075 833
- WO-A1-2012/143323
- WO-A1-2014/064335
- WO-A1-2019/237321

## Description

### FIELD OF THE INVENTION

The present invention relates to a packaged laundry detergent product, wherein a laundry detergent powder is enclosed by a multi-layer marine biodegradable laminated film package. The film package has a good marine biodegradable profile.

### BACKGROUND OF THE INVENTION

Packaged detergent products wherein a laundry powder is enclosed by a film package are used throughout the world. These packaged detergent products are different from the water-soluble detergent products, such as pouches. Water-soluble detergent products are designed to enable the entire product, including the film package, to be dosed into the water. The water-soluble film dissolves in the wash water. Instead, the packaged detergent products of the present invention typically have a water-insoluble film package. The film package is designed to be opened and only the contents of the film package, i.e. the laundry powder, is dosed into the wash water. The packaged products of the present invention are of a small size, typically containing only a single dose. The advantages of the packaged detergent product are the improvement in storage stability of the laundry powder, and the ease of use for dispensing a single dose of the laundry powder into the wash water. These packaged detergent products are most often used in hot and humid geographies, where the benefit of the improved storage stability is of highest importance.

WO 2019/237321 A1 discloses a laundry detergent product comprising a laundry particulate detergent composition and a water-proof or water-resistant flexible package.

However, the disadvantage of these packaged detergent products is the single use nature of the packaged film, which accumulates in waste disposal systems around the world. Recent advances have been directed towards improving the compostability of these packaged detergent products, particularly the packaged film.

The present invention focuses on a different benefit of these packaged detergent products, namely an improvement in the marine biodegradation. Protecting the marine environment from waste is an important aim, and one that has recently gained significant attention. The present invention aims to provide a packaged detergent product that even if it inadvertently ends up in a marine environment, it has good marine biodegradable performance and will degrade and its impact on the marine environment is dramatically reduced.

The present invention provides a packaged detergent product that has good marine biodegradable performance. The choice of a multi-layer marine biodegradable laminated film package contributes to this enhanced marine biodegradability profile, and most notably the choice of a laminate layer of polybutylene succinate and/or copolymers thereof together with a layer of cellulose or paper, provides a packaged detergent product that provides good storage stability profile for the enclosed detergent powder, even under stressful tropical conditions, whilst also providing good marine biodegradation.

Biodegradation encompasses many different types of chemical processes in many different environments. Indeed, biodegradation is one of several environmental fate processes, which include: dilution, volatilization, sorption, chemical-, photo- and bio- degradation. Ultimate biodegradation or mineralization is the complete breakdown of an organic (carbon-containing) material into simple compounds (i.e. CO₂, CH₄, NO₃, etc.) by living organisms. A key principle is that the material must biodegrade in the habitat to which it is discarded. Just because a material biodegrades in some place at some time doesn't mean it biodegrades everywhere.

For example, a material that is compostable, isn't necessarily marine biodegradable. Compostable is a form of biodegradation that implies a specific treatment (composting system) and occurs in a terrestrial compartment. The material is tested using standard methods for its chemical characteristics, disintegration in an aerobic and/or anaerobic composting facility, biodegradation in the facility, and ecotoxicity to microorganisms responsible for composting and to organisms exposed when compost is applied to land. Composting can be carried out at the household level (home composting), in garden composters or in composting toilets, or at municipal level at centralized composting plants. Bacterial activity is strongly impacted by process conditions. For example, degradation is typically easier/faster in municipal composting compared to home composting as the temperature used in municipal composting is much higher (50-70°C) than the temperature used for home composting (20-30°C). Other parameters that mean typically faster degradation in industrial composting compared to home composting are mechanical stress (mixing) and the exposure to light. So even compostability differs depending on the environment (e.g. municipal or home).

Marine biodegradation is what happens in an aquatic environment, where different conditions (environmental and bacterial) are present and, for some aspects could be less favorable compared to those found in a compost environment. For example, although home composting and marine degradation both need to happen at lower temperature compared to municipal composting, in marine biodegradation the temperature is even lower (15-20°C) which reduces the bacteria activities further.

In addition, the microbial communities found in a marine environment are different from that found in a municipal waste-water plant and in compost environments. They differ on the bacterial constitution and activity setups, marine biodegradation typically having a lower concentration of bacteria compared to home composting. Another difference is that home composting has fungi, where these don't exist in marine conditions.

There are different standards available to assess marine degradability. The present invention uses the OECD 301B standard, and where the success criteria is set at 60% mass conversion after 60 days.

### SUMMARY OF THE INVENTION

The present invention provides a packaged laundry detergent product comprising: (a) a laundry detergent powder, wherein the laundry detergent powder comprises: (i) detersive surfactant; (ii) polymer; (iii) filler salt; (iv) perfume; (v) optionally, bleach; (vi) optionally, enzyme; and (vii) optionally, buffer; and (b) a multi-layer marine biodegradable laminated film package, wherein the film package comprises at least two layers: (i) a first layer selected from cellulose or paper; and (ii) a second layer selected from polybutylene succinate and/or co-polymers thereof, wherein the first layer and second layer are laminated together, wherein the laminated film package encloses the laundry detergent powder, and wherein the second layer is in contact with the laundry detergent powder.

### DETAILED DESCRIPTION OF THE INVENTION

**Packaged laundry detergent product.** The packaged laundry detergent product comprises: (a) a laundry detergent powder, wherein the laundry detergent powder comprises: (i) detersive surfactant; (ii) polymer; (iii) filler salt; (iv) perfume; (v) optionally, bleach; (vi) optionally, enzyme; and (vii) optionally, buffer; and (b) a multi-layer marine biodegradable laminated film package, wherein the film package comprises at least two layers: (i) a first layer selected from cellulose or paper; and (ii) a second layer selected from polybutylene succinate and/or co-polymers thereof, wherein the first layer and second layer are laminated together, wherein the laminated film package encloses the laundry detergent powder, and wherein the second layer is in contact with the laundry detergent powder.

In addition to the good marine degradation profile, the packaged product also has a good pulpability profile.

**Multi-layer marine biodegradable laminated film package.** wherein the film package comprises at least two layers: (i) a first layer selected from cellulose or paper; and (ii) a second layer selected from polybutylene succinate and/or co-polymers thereof.

The laminated film package encloses the laundry detergent powder.

Typically, the film package has a marine biodegradability such that it will decompose at least 60% within 60 days, or even at least 60% within 30 days, or even at least 80% within 60 days, or even at least 80% within 30 days, according to the marine biodegradability test OECD 301B.

The package film typically has a moisture vapor transfer rate (MVTR) of 10g/m²/day or less, or 8.0g/m²/day or less, or 6.0g/m²/day or less, or 5.0g/m²/day or less. The MVTR test method used is ASTM F1249-13.

The film package may comprise an adhesive, wherein the first layer and second layer are laminated together by the adhesive. Suitable adhesives are described in more detail below.

The adhesive may bond a metalized cellulose first layer to the second layer.

The first layer and second layer may be laminated together with an adhesive layer being in between.

**First layer.** The first layer is selected from cellulose or paper. The first layer can be cellulose. The first layer can be paper.

The first layer may have been subjected to a metallization treatment. Suitable metallization treatments are described in more detail below.

The first layer may have been subjected to a lacquer coating treatment. Suitable lacquer coating treatments are described in more detail below.

The first layer may have been subjected to a printing treatment. Suitable printing treatments are described in more detail below.

Typically, the first layer has a thickness of at least 5.0µm, and more typically from 20µm to 30µm. If the first layer has been subjected to a treatment, such as a metallization treatment, lacquer coating treatment, and/or printing treatment, the treatment may increase the thickness of the first layer by up to 5.0µm, more typically up to 2.0µm, or up to 1.0µm.

If the first layer is selected from cellulose, then additional layers of cellulose may also be present in the laminate.

**Second layer.** The second layer selected from polybutylene succinate and/or co-polymers thereof. A suitable co-polymer is polybutylene succinate adipate co-polymer (PBSA). The second layer may be selected from polybutylene succinate. The second layer is in contact with the laundry detergent powder.

**Adhesive.** Suitable adhesive can be selected according to the particular composition of the adjoining layers to be bonded in a multi-layer structure. One skilled in the polymer art can select the appropriate adhesive based on the other materials used in the multi-layer structure.

Suitable adhesives can be hot melt adhesives, solvent-based adhesives and water-based adhesives. Solution-based adhesives may also be used.

Suitable adhesives can be selected from acrylic, polyvinyl acetate, and other commonly used adhesives.

The adhesive may be a renewable adhesive, such as BioTAK^{®} by Berkshire Labels.
A suitable adhesive is selected from polyurethane adhesives and/or biodegradable water-based adhesives. A suitable polyurethane adhesive is R2291 from Toyo Morton. A suitable biodegradable water-base adhesive is EPOTAL 3675X from BASF.

**Metallization treatment.** The first layer may have been subjected to a metallization treatment. Any - metallization treatments are suitable that are known for cellulose and paper treatment laminate layers. Any suitable metal may be used.

**Lacquer coating treatment.** The first layer may have been subjected to a lacquer coating treatment.. Suitable lacquers for use in the lacquer coating treatment are described in more detail below.

**Lacquer.** The lacquer functions to protect any ink layer from its physical and chemical environment. The lacquer is typically formulated to optimize durability and provide a glossy or matte finish.

Suitable lacquers are selected from resin, additive, and solvent/ water. The lacquer may be a nitrocellulose-based lacquer.

The lacquer is typically present in a thickness of up to 25µm, preferably up to 10µm. The amount of lacquer present affects the rate of degradation for the entire film package, and not just the rate of the degradation of the lacquer itself. Thus, a thinner lacquer layer results in a faster biodegradation rate for the entire film package.

The lacquer may be used in combination with a primer.

**Printing treatment.** The first layer may have been subjected to a printing treatment.

Suitable inks used in the printing treatment are described in more detail below.

A suitable printing treatment is the application of an ink, such as a solvent-based ink, to the first layer via a rotogravure printing treatment step.

**Ink.** Suitable inks can be solvent-based or water-based. The ink may be high abrasive resistant. For example, the high abrasive resistant ink can include coatings cured by ultraviolet radiation (UV) or electron beams (EB).

The ink may be derived from a petroleum source. The ink may be derived from a renewable resource, such as soy, a plant, or a mixture thereof. A suitable ink is a solvent-based ink.

Suitable inks include ECO-SUREITM from Gans Ink & Supply Co. and solvent-based VUTEk^{®} and BioVuTM inks from EFI, which are derived completely from renewable resources (e.g. corn). Suitable inks are based on Joncryl FLX 5060 and standard pigment concentrate based on Joncryl HPD 96 from BASF. The ink is typically present in a thickness of about 0.5µm to about 20µm, preferably about 1µm to about 10µm, more preferably about 2.5µm to about 3.5µm.

**Laundry detergent powder.** The laundry detergent powder comprises: (i) detersive surfactant; (ii) polymer; (iii) filler salt; (iv) perfume; (v) optionally, bleach; (vi) optionally, enzyme; and (vii) optionally, buffer.

Typically, the laundry detergent powder (herein: "laundry detergent composition") is a fully formulated laundry detergent composition, not a portion thereof such as a spray-dried, extruded or agglomerate particle that only forms part of the laundry detergent composition. Typically, the laundry detergent composition comprises a plurality of chemically different particles, such as spray-dried base detergent particles and/or agglomerated base detergent particles and/or extruded base detergent particles, in combination with one or more, typically two or more, or five or more, or even ten or more particles selected from: surfactant particles, including surfactant agglomerates, surfactant extrudates, surfactant needles, surfactant noodles, surfactant flakes; phosphate particles; zeolite particles; silicate salt particles, especially sodium silicate particles; carbonate salt particles, especially sodium carbonate particles; polymer particles such as carboxylate polymer particles, cellulosic polymer particles, starch particles, polyester particles, polyamine particles, terephthalate polymer particles, polyethylene glycol particles; aesthetic particles such as coloured noodles, needles, lamellae particles and ring particles; enzyme particles such as protease granulates, amylase granulates, lipase granulates, cellulase granulates, mannanase granulates, pectate lyase granulates, xyloglucanase granulates, bleaching enzyme granulates and co- granulates of any of these enzymes, preferably these enzyme granulates comprise sodium sulphate; bleach particles, such as percarbonate particles, especially coated percarbonate particles, such as percarbonate coated with carbonate salt, sulphate salt, silicate salt, borosilicate salt, or any combination thereof, perborate particles, bleach activator particles such as tetra acetyl ethylene diamine particles and/or alkanoyl oxybenzene sulphonate particles, bleach catalyst particles such as transition metal catalyst particles, and/or isoquinolinium bleach catalyst particles, pre-formed peracid particles, especially coated pre-formed peracid particles; filler particles such as sulphate salt particles and chloride particles; clay particles such as montmorillonite particles and particles of clay and silicone; flocculant particles such as polyethylene oxide particles; wax particles such as wax agglomerates; silicone particles, brightener particles; dye transfer inhibition particles; dye fixative particles; perfume particles such as perfume microcapsules and starch encapsulated perfume accord particles, or pro-perfume particles such as Schiff base reaction product particles; hueing dye particles; chelant particles such as chelant agglomerates; and any combination thereof.

Suitable laundry detergent compositions comprise a detergent ingredient selected from: detersive surfactant, such as anionic detersive surfactants, non-ionic detersive surfactants, cationic detersive surfactants, zwitterionic detersive surfactants and amphoteric detersive surfactants; polymers, such as carboxylate polymers, soil release polymer, anti-redeposition polymers, dye polymers, cellulosic polymers and care polymers; bleach, such as sources of hydrogen peroxide, bleach activators, bleach catalysts and pre-formed peracids; photobleach, such as such as zinc and/or aluminium sulphonated phthalocyanine; enzymes, such as proteases, amylases, cellulases, lipases; zeolite builder; phosphate builder; co-builders, such as citric acid and citrate; carbonate, such as sodium carbonate and sodium bicarbonate; sulphate salt, such as sodium sulphate; silicate salt such as sodium silicate; chloride salt, such as sodium chloride; brighteners; chelants; hueing agents; dye transfer inhibitors; dye fixative agents; perfume; silicone; fabric softening agents, such as clay; flocculants, such as polyethyleneoxide; suds supressors; and any combination thereof.

Suitable laundry detergent compositions may have a low buffering capacity. Such laundry detergent compositions typically have a reserve alkalinity to pH 9.5 of less than 5.0gNaOH/100g. These low buffered laundry detergent compositions typically comprise low levels of carbonate salt.

**Detersive Surfactant:** Suitable detersive surfactants include anionic detersive surfactants, non-ionic detersive surfactant, cationic detersive surfactants, zwitterionic detersive surfactants and amphoteric detersive surfactants. Suitable detersive surfactants may be linear or branched, substituted or un-substituted, and may be derived from petrochemical material or biomaterial.

**Anionic detersive surfactant:** Suitable anionic detersive surfactants include sulphonate and sulphate detersive surfactants.

Suitable sulphonate detersive surfactants include methyl ester sulphonates, alpha olefin sulphonates, alkyl benzene sulphonates, especially alkyl benzene sulphonates, preferably C₁₀₋₁₃ alkyl benzene sulphonate. Suitable alkyl benzene sulphonate (LAS) is obtainable, preferably obtained, by sulphonating commercially available linear alkyl benzene (LAB); suitable LAB includes low 2-phenyl LAB, other suitable LAB include high 2-phenyl LAB, such as those supplied by Sasol under the tradename Hyblene^{®}.

Suitable sulphate detersive surfactants include alkyl sulphate, preferably C₈₋₁₈ alkyl sulphate, or predominantly C₁₂ alkyl sulphate.

A preferred sulphate detersive surfactant is alkyl alkoxylated sulphate, preferably alkyl ethoxylated sulphate, preferably a C₈₋₁₈ alkyl alkoxylated sulphate, preferably a C₈₋₁₈ alkyl ethoxylated sulphate, preferably the alkyl alkoxylated sulphate has an average degree of alkoxylation of from 0.5 to 20, preferably from 0.5 to 10, preferably the alkyl alkoxylated sulphate is a C₈₋₁₈ alkyl ethoxylated sulphate having an average degree of ethoxylation of from 0.5 to 10, preferably from 0.5 to 5, more preferably from 0.5 to 3 and most preferably from 0.5 to 1.5.

The alkyl sulphate, alkyl alkoxylated sulphate and alkyl benzene sulphonates may be linear or branched, substituted or un-substituted, and may be derived from petrochemical material or biomaterial.

Other suitable anionic detersive surfactants include alkyl ether carboxylates.

Suitable anionic detersive surfactants may be in salt form, suitable counter-ions include sodium, calcium, magnesium, amino alcohols, and any combination thereof. A preferred counterion is sodium.

**Non-ionic detersive surfactant:** Suitable non-ionic detersive surfactants are selected from the group consisting of: C₈-C₁₈ alkyl ethoxylates, such as, NEODOL^{®} non-ionic surfactants from Shell; C₆-C₁₂ alkyl phenol alkoxylates wherein preferably the alkoxylate units are ethyleneoxy units, propyleneoxy units or a mixture thereof; C₁₂-C₁₈ alcohol and C₆-C₁₂ alkyl phenol condensates with ethylene oxide/propylene oxide block polymers such as Pluronic^{®} from BASF; alkylpolysaccharides, preferably alkylpolyglycosides; methyl ester ethoxylates; polyhydroxy fatty acid amides; ether capped poly(oxyalkylated) alcohol surfactants; and mixtures thereof.

Suitable non-ionic detersive surfactants are alkylpolyglucoside and/or an alkyl alkoxylated alcohol.

Suitable non-ionic detersive surfactants include alkyl alkoxylated alcohols, preferably C₈₋₁₈ alkyl alkoxylated alcohol, preferably a C₈₋₁₈ alkyl ethoxylated alcohol, preferably the alkyl alkoxylated alcohol has an average degree of alkoxylation of from 1 to 50, preferably from 1 to 30, or from 1 to 20, or from 1 to 10, preferably the alkyl alkoxylated alcohol is a C₈₋₁₈ alkyl ethoxylated alcohol having an average degree of ethoxylation of from 1 to 10, preferably from 1 to 7, more preferably from 1 to 5 and most preferably from 3 to 7. The alkyl alkoxylated alcohol can be linear or branched, and substituted or un-substituted.

Suitable nonionic detersive surfactants include secondary alcohol-based detersive surfactants.

**Cationic detersive surfactant:** Suitable cationic detersive surfactants include alkyl pyridinium compounds, alkyl quaternary ammonium compounds, alkyl quaternary phosphonium compounds, alkyl ternary sulphonium compounds, and mixtures thereof.

Preferred cationic detersive surfactants are quaternary ammonium compounds having the general formula:

(R)(R₁)(R₂)(R₃)N⁺ X⁻

wherein, R is a linear or branched, substituted or unsubstituted C₆₋₁₈ alkyl or alkenyl moiety, R₁ and R₂ are independently selected from methyl or ethyl moieties, R₃ is a hydroxyl, hydroxymethyl or a hydroxyethyl moiety, X is an anion which provides charge neutrality, preferred anions include: halides, preferably chloride; sulphate; and sulphonate.

**Zwitterionic detersive surfactant:** Suitable zwitterionic detersive surfactants include amine oxides and/or betaines.

**Polymer:** Suitable polymers include carboxylate polymers, soil release polymers, anti-redeposition polymers, dye polymers, cellulosic polymers, care polymers and any combination thereof.

**Carboxylate polymer:** The composition may comprise a carboxylate polymer, such as a maleate/acrylate random copolymer or polyacrylate homopolymer. Suitable carboxylate polymers include: polyacrylate homopolymers having a molecular weight of from 4,000 Da to 9,000 Da; maleate/acrylate random copolymers having a molecular weight of from 50,000 Da to 100,000 Da, or from 60,000 Da to 80,000 Da.

Another suitable carboxylate polymer is a co-polymer that comprises: (i) from 50 to less than 98 wt% structural units derived from one or more monomers comprising carboxyl groups; (ii) from 1 to less than 49 wt% structural units derived from one or more monomers comprising sulfonate moieties; and (iii) from 1 to 49 wt% structural units derived from one or more types of monomers selected from ether bond-containing monomers represented by formulas (I) and (II): 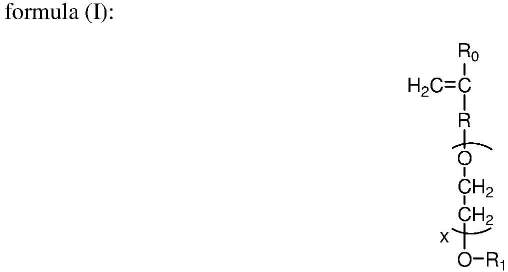 wherein in formula (I), R₀ represents a hydrogen atom or CH₃ group, R represents a CH₂ group, CH₂CH₂ group or single bond, X represents a number 0-5 provided X represents a number 1-5 when R is a single bond, and R₁ is a hydrogen atom or C₁ to C₂₀ organic group; 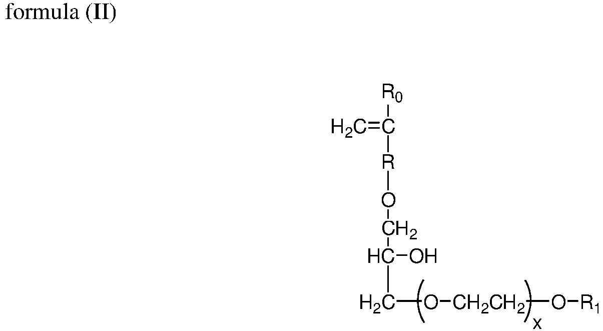 wherein in formula (II), R₀ represents a hydrogen atom or CH₃ group, R represents a CH₂ group, CH₂CH₂ group or single bond, X represents a number 0-5, and R₁ is a hydrogen atom or C₁ to C₂₀ organic group.

It may be preferred that the polymer has a weight average molecular weight of at least 50kDa, or even at least 70kDa.

**Soil release polymer:** The composition may comprise a soil release polymer. A suitable soil release polymer has a structure as defined by one of the following structures (I), (II) or (III):

(I) -[(OCHR¹-CHR²)ₐ-O-OC-Ar-CO-]_{d}

(II) -[(OCHR³-CHR⁴)_{b}-O-OC-sAr-CO-]ₑ

(III) -[(OCHR⁵-CHR⁶)_{c}-OR⁷]_{f}

wherein:
a, b and c are from 1 to 200;
d, e and f are from 1 to 50;
Ar is a 1,4-substituted phenylene;
sAr is 1,3-substituted phenylene substituted in position 5 with SO₃Me;
Me is Li, K, Mg/2, Ca/2, Al/3, ammonium, mono-, di-, tri-, or tetraalkylammonium wherein the alkyl groups are C₁-C₁₈ alkyl or C₂-C₁₀ hydroxyalkyl, or mixtures thereof;
R¹, R², R³, R⁴, R⁵ and R⁶ are independently selected from H or C₁-C₁₈ n- or iso-alkyl; and
R⁷ is a linear or branched C₁-C₁₈ alkyl, or a linear or branched C₂-C₃₀ alkenyl, or a cycloalkyl group with 5 to 9 carbon atoms, or a C₈-C₃₀ aryl group, or a C₆-C₃₀ arylalkyl group.

Suitable soil release polymers are sold by Clariant under the TexCare^{®} series of polymers, e.g. TexCare^{®} SRN240 and TexCare^{®} SRA300. Other suitable soil release polymers are sold by Solvay under the Repel-o-Tex^{®} series of polymers, e.g. Repel-o-Tex^{®} SF2 and Repel-o-Tex^{®} Crystal.

**Anti-redeposition polymer:** Suitable anti-redeposition polymers include polyethylene glycol polymers and/or polyethyleneimine polymers.

Suitable polyethylene glycol polymers include random graft co-polymers comprising: (i) hydrophilic backbone comprising polyethylene glycol; and (ii) hydrophobic side chain(s) selected from the group consisting of: C₄-C₂₅ alkyl group, polypropylene, polybutylene, vinyl ester of a saturated C₁-C₆ mono-carboxylic acid, C₁-C₆ alkyl ester of acrylic or methacrylic acid, and mixtures thereof. Suitable polyethylene glycol polymers have a polyethylene glycol backbone with random grafted polyvinyl acetate side chains. The average molecular weight of the polyethylene glycol backbone can be in the range of from 2,000 Da to 20,000 Da, or from 4,000 Da to 8,000 Da. The molecular weight ratio of the polyethylene glycol backbone to the polyvinyl acetate side chains can be in the range of from 1:1 to 1:5, or from 1:1.2 to 1:2. The average number of graft sites per ethylene oxide unit can be less than 0.02, or less than 0.016, the average number of graft sites per ethylene oxide unit can be in the range of from 0.010 to 0.018, or the average number of graft sites per ethylene oxide unit can be less than 0.010, or in the range of from 0.004 to 0.008.

Suitable polyethylene glycol polymers are described in WO08/007320.

A suitable polyethylene glycol polymer is Sokalan HP22.

**Dye polymer:** Suitable polymeric dyes include dyes selected from the group consisting of polymers containing covalently bound (sometimes referred to as conjugated) chromogens, (also known as dye-polymer conjugates), for example polymers with chromogen monomers copolymerized into the backbone of the polymer and mixtures thereof.

Polymeric dyes include: (a) Reactive dyes bound to water soluble polyester polymers via at least one and preferably two free OH groups on the water soluble polyester polymer. The water soluble polyester polymers can be comprised of comonomers of a phenyl dicarboxylate, an oxyalkyleneoxy and a polyoxyalkyleneoxy; (b) Reactive dyes bound to polyamines which are polyalkylamines that are generally linear or branched. The amines in the polymer may be primary, secondary and/or tertiary. Polyethyleneimine in one aspect is preferred. In another aspect, the polyamines are ethoxylated; (c) Dye polymers having dye moieties carrying negatively charged groups obtainable by copolymerization of an alkene bound to a dye containing an anionic group and one or more further alkene comonomers not bound to a dye moiety; (d) Dye polymers having dye moieties carrying positively charged groups obtainable by copolymerization of an alkene bound to a dye containing an cationic group and one or more further alkene comonomers not bound to a dye moiety; (e) Polymeric azo polyoxyalkylene dyes containing carboxylate groups; in some aspects those having carboxylic acid groups with a pKa value below 4, or below 3, or even below 2, may be preferred; and (f) dye polymer conjugates comprising at least one reactive dye and a polymer comprising a moiety selected from the group consisting of a hydroxyl moiety, a primary amine moiety, a secondary amine moiety, a thiol moiety and combinations thereof; said polymers preferably selected from the group consisting of polysaccharides, proteins, polyalkyleneimines, polyamides, polyols, and silicones. In one aspect, carboxymethyl cellulose (CMC) may be covalently bound to one or more reactive blue, reactive violet or reactive red dye such as CMC conjugated with C.I. Reactive Blue 19, sold by Megazyme, Wicklow, Ireland under the product name AZO-CM-CELLULOSE, product code S-ACMC,
Other suitable polymeric dyes include polymeric dyes selected from the group consisting of alkoxylated triphenyl-methane polymeric colourants, alkoxylated carbocyclic and alkoxylated heterocyclic azo colourants, including alkoxylated thiophene polymeric colourants, and mixtures thereof. Preferred polymeric dyes comprise the optionally substituted alkoxylated dyes, such as alkoxylated triphenyl-methane polymeric colourants, alkoxylated carbocyclic and alkoxylated heterocyclic azo colourants including alkoxylated thiophene polymeric colourants, and mixtures thereof, such as the fabric-substantive colorants sold under the name of Liquitint^{®} (Milliken, Spartanburg, South Carolina, USA).

**Cellulosic polymer:** Suitable cellulosic polymers are selected from alkyl cellulose, alkyl alkoxyalkyl cellulose, carboxyalkyl cellulose, alkyl carboxyalkyl cellulose, sulphoalkyl cellulose, more preferably selected from carboxymethyl cellulose, methyl cellulose, methyl hydroxyethyl cellulose, methyl carboxymethyl cellulose, and mixures thereof.

Suitable carboxymethyl celluloses have a degree of carboxymethyl substitution from 0.5 to 0.9 and a molecular weight from 100,000 Da to 300,000 Da.

Suitable carboxymethyl celluloses have a degree of substitution greater than 0.65 and a degree of blockiness greater than 0.45, e.g. as described in WO09/154933.

**Care polymers:** Suitable care polymers include cellulosic polymers that are cationically modified or hydrophobically modified. Such modified cellulosic polymers can provide anti-abrasion benefits and dye lock benefits to fabric during the laundering cycle. Suitable cellulosic polymers include cationically modified hydroxyethyl cellulose.

Other suitable care polymers include dye lock polymers, for example the condensation oligomer produced by the condensation of imidazole and epichlorhydrin, preferably in ratio of 1:4:1. A suitable commercially available dye lock polymer is Polyquart^{®} FDI (Cognis).

Other suitable care polymers include amino-silicone, which can provide fabric feel benefits and fabric shape retention benefits.

**Bleach:** Suitable bleach includes sources of hydrogen peroxide, bleach activators, bleach catalysts, pre-formed peracids and any combination thereof. A particularly suitable bleach includes a combination of a source of hydrogen peroxide with a bleach activator and/or a bleach catalyst.

**Source of hydrogen peroxide:** Suitable sources of hydrogen peroxide include sodium perborate and/or sodium percarbonate.

**Bleach activator:** Suitable bleach activators include tetra acetyl ethylene diamine and/or alkanoyl oxybenzene sulphonate.

**Bleach catalyst:** The composition may comprise a bleach catalyst. Suitable bleach catalysts include oxaziridinium bleach catalysts, transistion metal bleach catalysts, especially manganese and iron bleach catalysts. A suitable bleach catalyst has a structure corresponding to general formula below: 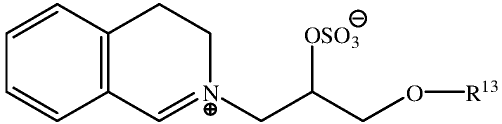 wherein R¹³ is selected from the group consisting of 2-ethylhexyl, 2-propylheptyl, 2-butyloctyl, 2-pentylnonyl, 2-hexyldecyl, n-dodecyl, n-tetradecyl, n-hexadecyl, n-octadecyl, iso-nonyl, iso-decyl, iso-tridecyl and iso-pentadecyl.

**Pre-formed peracid:** Suitable pre-form peracids include phthalimido-peroxycaproic acid.

**Enzymes:** Suitable enzymes include lipases, proteases, cellulases, amylases and any combination thereof.

**Protease:** Suitable proteases include metalloproteases and/or serine proteases. Examples of suitable neutral or alkaline proteases include: subtilisins (EC 3.4.21.62); trypsin-type or chymotrypsin-type proteases; and metalloproteases. The suitable proteases include chemically or genetically modified mutants of the aforementioned suitable proteases.

Suitable commercially available protease enzymes include those sold under the trade names Alcalase^{®}, Savinase^{®}, Primase^{®}, Durazym^{®}, Polarzyme^{®}, Kannase^{®}, Liquanase^{®}, Liquanase Ultra^{®}, Savinase Ultra^{®}, Ovozyme^{®}, Neutrase^{®}, Everlase^{®} and Esperase^{®} by Novozymes A/S (Denmark), those sold under the tradename Maxatase^{®}, Maxacal^{®}, Maxapem^{®}, Preferenz P^{®} series of proteases including Preferenz^{®} P280, Preferenz^{®} P281, Preferenz^{®} P2018-C, Preferenz^{®} P2081-WE, Preferenz^{®} P2082-EE and Preferenz^{®} P2083-A/J, Properase^{®}, Purafect^{®}, Purafect Prime^{®}, Purafect Ox^{®}, FN3^{®} , FN4^{®}, Excellase^{®} and Purafect OXP^{®} by DuPont, those sold under the tradename Opticlean^{®} and Optimase^{®} by Solvay Enzymes, those available from Henkel/ Kemira, namely BLAP (sequence shown in Figure 29 of US 5,352,604 with the folowing mutations S99D + S101 R + S103A + V104I + G159S, hereinafter referred to as BLAP), BLAP R (BLAP with S3T + V4I + V199M + V205I + L217D), BLAP X (BLAP with S3T + V4I+ V205I) and BLAP F49 (BLAP with S3T + V4I + A194P + V199M + V205I + L217D) - all from Henkel/Kemira; and KAP (Bacillus alkalophilus subtilisin with mutations A230V + S256G + S259N) from Kao.

A suitable protease is described in WO11/140316 and WO11/072117.

**Amylase:** Suitable amylases are derived from AA560 alpha amylase endogenous to Bacillus sp. DSM 12649, preferably having the following mutations: R118K, D183*, G184*, N195F, R320K, and/or R458K. Suitable commercially available amylases include Stainzyme^{®}, Stainzyme^{®} Plus, Natalase, Termamyl^{®}, Termamyl^{®} Ultra, Liquezyme^{®} SZ, Duramyl^{®}, Everest^{®} (all Novozymes) and Spezyme^{®} AA, Preferenz S^{®} series of amylases, Purastar^{®} and Purastar^{®} Ox Am, Optisize^{®} HT Plus (all Du Pont).
A suitable amylase is described in WO06/002643.

**Cellulase:** Suitable cellulases include those of bacterial or fungal origin. Chemically modified or protein engineered mutants are also suitable. Suitable cellulases include cellulases from the genera *Bacillus, Pseudomonas, Humicola, Fusarium, Thielavia, Acremonium,* e.g., the fungal cellulases produced from *Humicola insolens, Myceliophthora thermophila* and *Fusarium oxysporum.*

Commercially available cellulases include Celluzyme^{®}, Carezyme^{®}, and Carezyme^{®} Premium, Celluclean^{®} and Whitezyme^{®} (Novozymes A/S), Revitalenz^{®} series of enzymes (Du Pont), and Biotouch^{®} series of enzymes (AB Enzymes). Suitable commercially available cellulases include Carezyme^{®} Premium, Celluclean^{®} Classic. Suitable cellulases are described in WO07/144857 and WO10/056652.

**Lipase:** Suitable lipases include those of bacterial, fungal or synthetic origin, and variants thereof. Chemically modified or protein engineered mutants are also suitable. Examples of suitable lipases include lipases from *Humicola* (synonym *Thermomyces),* e.g., from *H. lanuginosa (T. lanuginosus*).

The lipase may be a "first cycle lipase", e.g. such as those described in WO06/090335 and WO13/116261. In one aspect, the lipase is a first-wash lipase, preferably a variant of the wild-type lipase from Thermomyces lanuginosus comprising T231R and/or N233R mutations. Preferred lipases include those sold under the tradenames Lipex^{®}, Lipolex^{®} and Lipoclean^{®} by Novozymes, Bagsvaerd, Denmark.

Other suitable lipases include: Liprl 139, e.g. as described in WO2013/171241; and TfuLip2, e.g. as described in WO2011/084412 and WO2013/033318.

**Other enzymes:** Other suitable enzymes are bleaching enzymes, such as peroxidases/oxidases, which include those of plant, bacterial or fungal origin and variants thereof. Commercially available peroxidases include Guardzyme^{®} (Novozymes A/S). Other suitable enzymes include choline oxidases and perhydrolases such as those used in Gentle Power Bleach^{™}.

Other suitable enzymes include pectate lyases sold under the tradenames X-Pect^{®}, Pectaway^{®} (from Novozymes A/S, Bagsvaerd, Denmark) and PrimaGreen^{®} (DuPont) and mannanases sold under the tradenames Mannaway^{®} (Novozymes A/S, Bagsvaerd, Denmark), and Mannastar^{®} (Du Pont).

Another suitable enzyme is phosphodiesterase (PDE).

**Zeolite builder:** The composition may comprise zeolite builder. The composition may comprise from 0wt% to 5wt% zeolite builder, or 3wt% zeolite builder. The composition may even be substantially free of zeolite builder; substantially free means "no deliberately added". Typical zeolite builders include zeolite A, zeolite P and zeolite MAP.

**Phosphate builder:** The composition may comprise phosphate builder. The composition may comprise from 0wt% to 5wt% phosphate builder, or to 3wt%, phosphate builder. The composition may even be substantially free of phosphate builder; substantially free means "no deliberately added". A typical phosphate builder is sodium tri-polyphosphate.

**Carbonate salt:** The composition may comprise carbonate salt. The composition may comprise from 0wt% to 10wt% carbonate salt, or to 5wt% carbonate salt. The composition may even be substantially free of carbonate salt; substantially free means "none deliberately added". Suitable carbonate salts include sodium carbonate and sodium bicarbonate.

**Silicate salt:** The composition may comprise silicate salt. The composition may comprise from 0wt% to 10wt% silicate salt, or to 5wt% silicate salt. A preferred silicate salt is sodium silicate, especially preferred are sodium silicates having a Na₂O:SiO₂ ratio of from 1.0 to 2.8, preferably from 1.6 to 2.0.

**Sulphate salt:** A suitable sulphate salt is sodium sulphate.

**Brightener:** Suitable fluorescent brighteners include: di-styryl biphenyl compounds, e.g. Tinopal^{®} CBS-X, di-amino stilbene di-sulfonic acid compounds, e.g. Tinopal^{®} DMS pure Xtra and Blankophor^{®} HRH, and Pyrazoline compounds, e.g. Blankophor^{®} SN, and coumarin compounds, e.g. Tinopal^{®} SWN.
Preferred brighteners are: sodium 2 (4-styryl-3-sulfophenyl)-2H-napthol[1,2-d]triazole, disodium 4,4'-bis{[(4-anilino-6-(N methyl-N-2 hydroxyethyl)amino 1 ,3,5- triazin-2-yl)];amino }stilbene-2-2' disulfonate, disodium 4,4'-bis{[(4-anilino-6-morpholino-1,3,5-triazin-2-yl)]amino} stilbene-2-2' disulfonate, and disodium 4,4'- bis(2-sulfostyryl)biphenyl. A suitable fluorescent brightener is C.I. Fluorescent Brightener 260, which may be used in its beta or alpha crystalline forms, or a mixture of these forms.

**Chelant:** The composition may also comprise a chelant selected from: diethylene triamine pentaacetate, diethylene triamine penta(methyl phosphonic acid), ethylene diamine-N'N'-disuccinic acid, ethylene diamine tetraacetate, ethylene diamine tetra(methylene phosphonic acid) and hydroxyethane di(methylene phosphonic acid). A preferred chelant is ethylene diamine-N'N'-disuccinic acid (EDDS) and/or hydroxyethane diphosphonic acid (HEDP). The composition preferably comprises ethylene diamine-N'N'- disuccinic acid or salt thereof. Preferably the ethylene diamine-N'N'-disuccinic acid is in S,S enantiomeric form. Preferably the composition comprises 4,5-dihydroxy-m-benzenedisulfonic acid disodium salt. Preferred chelants may also function as calcium carbonate crystal growth inhibitors such as: 1-hydroxyethanediphosphonic acid (HEDP) and salt thereof; N,N-dicarboxymethyl-2-aminopentane-1,5-dioic acid and salt thereof; 2-phosphonobutane-1,2,4-tricarboxylic acid and salt thereof; and combination thereof.

Other suitable chelants are MGDA and/or GLDA.

**Hueing agent:** Suitable hueing agents include small molecule dyes, typically falling into the Colour Index (C.I.) classifications of Acid, Direct, Basic, Reactive (including hydrolysed forms thereof) or Solvent or Disperse dyes, for example classified as Blue, Violet, Red, Green or Black, and provide the desired shade either alone or in combination. Preferred such hueing agents include Acid Violet 50, Direct Violet 9, 66 and 99, Solvent Violet 13 and any combination thereof.

Many hueing agents are known and described in the art which may be suitable for the present invention, such as hueing agents described in WO2014/089386.

Suitable hueing agents include phthalocyanine and azo dye conjugates, such as described in WO2009/069077.

Suitable hueing agents may be alkoxylated. Such alkoxylated compounds may be produced by organic synthesis that may produce a mixture of molecules having different degrees of alkoxylation. Such mixtures may be used directly to provide the hueing agent, or may undergo a purification step to increase the proportion of the target molecule. Suitable hueing agents include alkoxylated bis-azo dyes, such as described in WO2012/054835, and/or alkoxylated thiophene azo dyes, such as described in WO2008/087497 and WO2012/166768.

The hueing agent may be incorporated into the detergent composition as part of a reaction mixture which is the result of the organic synthesis for a dye molecule, with optional purification step(s). Such reaction mixtures generally comprise the dye molecule itself and in addition may comprise un-reacted starting materials and/or by-products of the organic synthesis route. Suitable hueing agents can be incorporated into hueing dye particles, such as described in WO 2009/069077.

**Dye transfer inhibitors:** Suitable dye transfer inhibitors include polyamine N-oxide polymers, copolymers of N-vinylpyrrolidone and N-vinylimidazole, polyvinylpyrrolidone, polyvinyloxazolidone, polyvinylimidazole and mixtures thereof. Preferred are poly(vinyl pyrrolidone), poly(vinylpyridine betaine), poly(vinylpyridine N-oxide), poly(vinyl pyrrolidone-vinyl imidazole) and mixtures thereof. Suitable commercially available dye transfer inhibitors include PVP-K15 and K30 (Ashland), Sokalan^{®} HP165, HP50, HP53, HP59, HP56K, HP56, HP66 (BASF), Chromabond^{®} S-400, S403E and S-100 (Ashland).

**Perfume:** Suitable perfumes comprise perfume materials selected from the group: (a) perfume materials having a ClogP of less than 3.0 and a boiling point of less than 250°C (quadrant 1 perfume materials); (b) perfume materials having a ClogP of less than 3.0 and a boiling point of 250°C or greater (quadrant 2 perfume materials); (c) perfume materials having a ClogP of 3.0 or greater and a boiling point of less than 250°C (quadrant 3 perfume materials); (d) perfume materials having a ClogP of 3.0 or greater and a boiling point of 250°C or greater (quadrant 4 perfume materials); and (e) mixtures thereof.

It may be preferred for the perfume to be in the form of a perfume delivery technology. Such delivery technologies further stabilize and enhance the deposition and release of perfume materials from the laundered fabric. Such perfume delivery technologies can also be used to further increase the longevity of perfume release from the laundered fabric. Suitable perfume delivery technologies include: perfume microcapsules, pro-perfumes, polymer assisted deliveries, molecule assisted deliveries, fiber assisted deliveries, amine assisted deliveries, cyclodextrin, starch encapsulated accord, zeolite and other inorganic carriers, and any mixture thereof. A suitable perfume microcapsule is described in WO2009/101593.

**Silicone:** Suitable silicones include polydimethylsiloxane and amino-silicones. Suitable silicones are described in WO05075616.

**Process for making the solid composition:** Typically, the particles of the composition can be prepared by any suitable method. For example: spray-drying, agglomeration, extrusion and any combination thereof.

Typically, a suitable spray-drying process comprises the step of forming an aqueous slurry mixture, transferring it through at least one pump, preferably two pumps, to a pressure nozzle. Atomizing the aqueous slurry mixture into a spray-drying tower and drying the aqueous slurry mixture to form spray-dried particles. Preferably, the spray-drying tower is a counter-current spray-drying tower, although a co-current spray-drying tower may also be suitable.

Typically, the spray-dried powder is subjected to cooling, for example an air lift. Typically, the spray-drying powder is subjected to particle size classification, for example a sieve, to obtain the desired particle size distribution. Preferably, the spray-dried powder has a particle size distribution such that weight average particle size is in the range of from 300 micrometers to 500 micrometers, and less than 10wt% of the spray-dried particles have a particle size greater than 2360 micrometers.

It may be preferred to heat the aqueous slurry mixture to elevated temperatures prior to atomization into the spray-drying tower, such as described in WO2009/158162.

It may be preferred for anionic surfactant, such as linear alkyl benzene sulphonate, to be introduced into the spray-drying process after the step of forming the aqueous slurry mixture: for example, introducing an acid precursor to the aqueous slurry mixture after the pump, such as described in WO 09/158449.

It may be preferred for a gas, such as air, to be introduced into the spray-drying process after the step of forming the aqueous slurry, such as described in WO2013/181205.

It may be preferred for any inorganic ingredients, such as sodium sulphate and sodium carbonate, if present in the aqueous slurry mixture, to be micronized to a small particle size such as described in WO2012/134969.

Typically, a suitable agglomeration process comprises the step of contacting a detersive ingredient, such as a detersive surfactant, e.g. linear alkyl benzene sulphonate (LAS) and/or alkyl alkoxylated sulphate, with an inorganic material, such as sodium carbonate and/or silica, in a mixer. The agglomeration process may also be an in-situ neutralization agglomeration process wherein an acid precursor of a detersive surfactant, such as LAS, is contacted with an alkaline material, such as carbonate and/or sodium hydroxide, in a mixer, and wherein the acid precursor of a detersive surfactant is neutralized by the alkaline material to form a detersive surfactant during the agglomeration process.

Other suitable detergent ingredients that may be agglomerated include polymers, chelants, bleach activators, silicones and any combination thereof.

The agglomeration process may be a high, medium or low shear agglomeration process, wherein a high shear, medium shear or low shear mixer is used accordingly. The agglomeration process may be a multi-step agglomeration process wherein two or more mixers are used, such as a high shear mixer in combination with a medium or low shear mixer. The agglomeration process can be a continuous process or a batch process.

It may be preferred for the agglomerates to be subjected to a drying step, for example to a fluid bed drying step. It may also be preferred for the agglomerates to be subjected to a cooling step, for example a fluid bed cooling step.

Typically, the agglomerates are subjected to particle size classification, for example a fluid bed elutriation and/or a sieve, to obtain the desired particle size distribution. Preferably, the agglomerates have a particle size distribution such that weight average particle size is in the range of from 300 micrometers to 800 micrometers, and less than 10wt% of the agglomerates have a particle size less than 150 micrometers and less than 10wt% of the agglomerates have a particle size greater than 1200 micrometers.

It may be preferred for fines and over-sized agglomerates to be recycled back into the agglomeration process. Typically, over-sized particles are subjected to a size reduction step, such as grinding, and recycled back into an appropriate place in the agglomeration process, such as the mixer. Typically, fines are recycled back into an appropriate place in the agglomeration process, such as the mixer.

It may be preferred for ingredients such as polymer and/or non-ionic detersive surfactant and/or perfume to be sprayed onto base detergent particles, such as spray-dried base detergent particles and/or agglomerated base detergent particles. Typically, this spray-on step is carried out in a tumbling drum mixer.

**Method of laundering fabric:** The method of laundering fabric comprises the step of contacting the solid composition to water to form a wash liquor, and laundering fabric in said wash liquor. Typically, the wash liquor has a temperature of above 0°C to 90°C, or to 60°C, or to 40°C, or to 30°C, or to 20°C. The fabric may be contacted to the water prior to, or after, or simultaneous with, contacting the solid composition with water. Typically, the wash liquor is formed by contacting the laundry detergent to water in such an amount so that the concentration of laundry detergent composition in the wash liquor is from 0.2g/l to 20g/l, or from 0.5g/l to 10g/l, or to 5.0g/l. The method of laundering fabric can be carried out in a front-loading automatic washing machine, top loading automatic washing machines, including high efficiency automatic washing machines, or suitable hand-wash vessels. Typically, the wash liquor comprises 90 litres or less, or 60 litres or less, or 15 litres or less, or 10 litres or less of water. Typically, 200g or less, or 150g or less, or 100g or less, or 50g or less of laundry detergent composition is contacted to water to form the wash liquor.

### Laundry Detergent Composition Examples:

| **Ingredient** | **Amount (in wt%)** |
|---|---|
| **Anionic detersive surfactant** (such as alkyl benzene sulphonate, alkyl ethoxylated sulphate and mixtures thereof) | from 8wt% to 15wt% |
| **Non-ionic detersive surfactant** (such as alkyl ethoxylated alcohol) | from 0.1wt% to 4wt% |
| **Cationic detersive surfactant** (such as quaternary ammonium compounds) | from 0wt% to 4wt% |
| **Other detersive surfactant** (such as zwiterionic detersive surfactants, amphoteric surfactants and mixtures thereof) | from 0wt% to 4wt% |
| **Carboxylate polymer** (such as co-polymers of maleic acid and acrylic acid and/or carboxylate polymers comprising ether moieties and sulfonate moieties) | from 0.1wt% to 4wt% |
| **Polyethylene glycol polymer** (such as a polyethylene glycol polymer comprising polyvinyl acetate side chains) | from 0wt% to 4wt% |
| **Polyester soil release polymer** (such as Repel-o-tex and/or Texcare polymers) | from 0wt% to 2wt% |
| **Cellulosic polymer** (such as carboxymethyl cellulose, methyl cellulose and combinations thereof) | from 0.5wt% to 2wt% |
| **Other polymer** (such as care polymers) | from 0wt% to 4wt% |
| **Zeolite builder and phosphate builder** (such as zeolite 4A and/or sodium tripolyphosphate) | from 0wt% to 4wt% |
| **Other co-builder** (such as sodium citrate and/or citric acid) | from 0wt% to 3wt% |
| **Carbonate salt** (such as sodium carbonate and/or sodium bicarbonate) | from 0wt% to 20wt% |
| **Silicate salt** (such as sodium silicate) | from 0wt% to 10wt% |
| **Filler** (such as sodium sulphate and/or bio-fillers) | from 10wt% to 70wt% |
| **Source of hydrogen peroxide** (such as sodium percarbonate) | from 0wt% to 20wt% |
| **Bleach activator** (such as tetraacetylethylene diamine (TAED) and/or nonanoyloxybenzenesulphonate (NOBS)) | from 0wt% to 8wt% |
| **Bleach catalyst** (such as oxaziridinium-based bleach catalyst and/or transition metal bleach catalyst) | from 0wt% to 0.1wt% |
| **Other bleach** (such as reducing bleach and/or pre-formed peracid) | from 0wt% to 10wt% |
| **Photobleach** (such as zinc and/or aluminium sulphonated phthalocyanine) | from 0wt% to 0.1wt% |
| **Chelant** (such as ethylenediamine-N'N'-disuccinic acid (EDDS) and/or hydroxyethane diphosphonic acid (HEDP)) | from 0.2wt% to 1wt% |
| **Hueing agent** (such as direct violet 9, 66, 99, acid red 50, solvent violet 13 and any combination thereof) | from 0wt% to 1wt% |
| **Brightener** (C.I. fluorescent brightener 260 or C.I. fluorescent brightener 351) | from 0.1wt% to 0.4wt% |
| **Protease** (such as Savinase, Savinase Ultra, Purafect, FN3, FN4 and any combination thereof) | from 0.1wt% to 0.4wt% |
| **Amylase** (such as Termamyl, Termamyl ultra, Natalase, Optisize, Stainzyme, Stainzyme Plus and any combination thereof) | from 0wt% to 0.2wt% |
| **Cellulase** (such as Carezyme and/or Celluclean) | from 0wt% to 0.2wt% |
| **Lipase** (such as Lipex, Lipolex, Lipoclean and any combination thereof) | from 0wt% to 1wt% |
| **Other enzyme** (such as xyloglucanase, cutinase, pectate lyase, mannanase, bleaching enzyme) | from 0wt% to 2wt% |
| **Fabric softener** (such as montmorillonite clay and/or polydimethylsiloxane (PDMS)) | from 0wt% to 15wt% |
| **Flocculant** (such as polyethylene oxide) | from 0wt% to 1wt% |
| **Suds suppressor** (such as silicone and/or fatty acid) | from 0wt% to 4wt% |
| **Perfume** (such as perfume microcapsule, spray-on perfume, starch encapsulated perfume accords, perfume loaded zeolite, and any combination thereof) | from 0.1wt% to 1wt% |
| **Aesthetics** (such as coloured soap rings and/or coloured speckles/noodles) | from 0wt% to 1wt% |
| **Miscellaneous** | balance to 100wt% |

**Marine biodegrability test.** Typically, the film package has a marine biodegradability such that it will decompose at least 60% within 60 days according to the marine biodegradability test OECD 301B.

**Moisture vapor transfer rate (MVTR) test.** The package film typically has a moisture vapor transfer rate (MVTR) of 10g/m²/day or less, or 8.0g/m²/day or less, or even 6.0g/m²/day or less, or even 5.0g/m²/day or less.

A suitable MVTR test method is according to ASTM F1249-13 under the following test conditions: the temperature of the test gas is 38°C (± 0.56°C) and the relative humidity is 90 % (± 3%). The carrier gas is 100% N₂ (dry). Suitable equipment used to run the test is a Permatran-W Water Vapor Permeability Instrument following the written procedure QMS 702-004.

Another suitable MVTR test method is according to ASTM-E96.

### EXAMPLES

### Marine Biodegradable flex film structure based on metalized cellulose and polybutylene succinate

The structure is prepared by laminating the two (2) separate layers with an appropriate adhesive.

A film of BioBPS (polybutylene succinate) is produced via standard film blowing technology. In this case the following ingredients levels are:

| | |
|---|---|
| Mitsubishi BioPBS FD92PM | 95-97% |
| Mitsubishi MB92PM | 2-3% |
| Mitsubishi MB92AM | 1-2 % |

This film is then laminated with a Futamura NM metalized cellulose film (23µm thick), on an adhesive lamination machine. The lamination happens on the metalized side of the Futamura NM film.

A first laminate is prepared using a water-based adhesive from BASF: EPOTAL 3675X. A second laminate is prepared using a solvent-based Polyurethane Adhesive from Toyo Morton: R2291.

These two (2) laminates are printed via multi-color gravure printing process where a top lacquer is also applied to protect the printed artwork. The inks are Joncryl FLX 5060 and standard pigment concentrate is Joncryl HPD 96.

The lacquer is a combination of Joncryl FLX 5060, JoncrylWax 35 and JoncrylWax 4 for slip control and scratch resistance. The amount applied is 1-2 g/m² dry for the ink and 1-2 g/m² dry for the laquer.

A third laminate is also prepared by extruding/coating the BioPBS material directly onto the Futamura NM via an extrusion/coating process with the help of a very thin anchor coating layer applied on the Futamura NM (R2291 from Toyo Morton).

The third laminate is printed via standard gravure printing process with a protection lacquer on top in the same way as described above for the first and second laminates.

The laminates are prepared into sachets by a standard sachet making process.

Laundry detergent is then dosed into the sachets, and sachets are sealed in a conventional manner to form packaged detergent products.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A packaged laundry detergent product comprising:
(a) a laundry detergent powder, wherein the laundry detergent powder comprises:
(i) detersive surfactant;
(ii) polymer;
(iii) filler salt;
(iv) perfume;
(v) optionally, bleach;
(vi) optionally, enzyme; and
(vii) optionally, buffer; and
(b) a multi-layer marine biodegradable laminated film package, wherein the film package comprises at least two layers:
(i) a first layer selected from cellulose or paper; and
(ii) a second layer selected from polybutylene succinate and/or co-polymers thereof,
wherein the first layer and second layer are laminated together,
wherein the laminated film package encloses the laundry detergent powder, and wherein the second layer is in contact with the laundry detergent powder.

2. A product according to claim 1, wherein the film package has a marine biodegradability such that it will decompose at least 60% within 60 days according to the marine biodegradability test OECD 301B.

3. A product according to any preceding claim, wherein the film package comprises an adhesive, and wherein the first layer and second layer are laminated together by the adhesive.

4. A product according to claim3, wherein the second layer is selected from polybutylene succinate.

5. A product according to any preceding claim, wherein the first layer has been subjected to a metallization treatment.

6. A product according to any preceding claim, wherein the first layer has been subjected to a lacquer coating treatment.

7. A product according any preceding claim, wherein the a first layer is selected from cellulose.

8. A product according to any preceding claim, wherein the first layer has been subjected to a printing treatment.

9. A product according to any preceding claim, wherein the first layer is cellulose.

10. A product according to any of claims 1-10, wherein the first layer is paper.

11. A product according to any preceding claim, wherein the package film has a moisture vapor transfer rate (MVTR) of 10g/m²/day or less, wherein the MVTR test method is according to ASTM F1249-13 under the following test conditions: the temperature of the test gas is 38°C (± 0.56°C) and the relative humidity is 90 % (± 3%), the carrier gas is 100% N₂ (dry).

## Patentansprüche

1. Verpacktes Wäschewaschmittelprodukt, umfassend:
(a) ein Wäschewaschmittelpulver, wobei das Wäschewaschmittelpulver umfasst:
(i) Reinigungstensid;
(ii) Polymer;
(iii) Füllstoffsalz;
(iv) Duftstoff;
(v) wahlweise, Bleichmittel;
(vi) wahlweise, Enzym; und
(vii) wahlweise, Puffer; und
(b) eine mehrschichtige, im Meer biologisch abbaubare laminierte Folienverpackung, wobei die Folienverpackung mindestens zwei Schichten umfasst:
(i) eine erste Schicht, ausgewählt aus Zellulose oder Papier; und
(ii) eine zweite Schicht, ausgewählt aus Polybutylensuccinat und/oder Copolymeren davon,
wobei die erste Schicht und die zweite Schicht zusammenlaminiert sind,
wobei die laminierte Folienverpackung das Wäschewaschmittelpulver umschließt, und
wobei die zweite Schicht mit dem Wäschewaschmittelpulver in Kontakt ist.

2. Produkt nach Anspruch 1, wobei die Folienverpackung eine derartige biologische Abbaubarkeit im Meer aufweist, dass sie sich gemäß der Prüfung zur biologischen Abbaubarkeit im Meer OECD 301B innerhalb von 60 Tagen zu mindestens 60 % zersetzt.

3. Produkt nach einem der vorstehenden Ansprüche, wobei die Folienverpackung einen Klebstoff umfasst und wobei die erste Schicht und die zweite Schicht durch den Klebstoff zusammenlaminiert sind.

4. Produkt nach Anspruch 3, wobei die zweite Schicht aus Polybutylensuccinat ausgewählt ist.

5. Produkt nach einem der vorstehenden Ansprüche, wobei die erste Schicht einer Metallisierungsbehandlung unterzogen wurde.

6. Produkt nach einem der vorstehenden Ansprüche, wobei die erste Schicht einer Lackbeschichtungsbehandlung unterzogen wurde.

7. Produkt nach einem der vorstehenden Ansprüche, wobei die erste Schicht aus Cellulose ausgewählt ist.

8. Produkt nach einem der vorstehenden Ansprüche, wobei die erste Schicht einer Druckbehandlung unterzogen wurde.

9. Produkt nach einem der vorstehenden Ansprüche, wobei die erste Schicht Cellulose ist.

10. Produkt nach einem der Ansprüche 1 bis 10, wobei die erste Schicht Papier ist.

11. Produkt nach einem der vorstehenden Ansprüche, wobei die Verpackungsfolie eine Wasserdampfdurchlässigkeitsrate (MVTR) von 10 g/m²/Tag oder weniger aufweist, wobei das MVTR-Prüfverfahren gemäß ASTM F1249-13 unter den folgenden Prüfbedingungen erfolgt: die Temperatur des Prüfgases beträgt 38 °C (± 0,56 °C) und die relative Luftfeuchtigkeit beträgt 90 % (± 3 %), das Trägergas ist 100 % N₂ (trocken).

## Revendications

1. Produit détergent conditionné pour le linge comprenant :
(a) une poudre détergente pour le linge, dans lequel la poudre détergente pour le linge comprend :
(i) un agent tensioactif détersif ;
(ii) un polymère ;
(iii) un sel de charge ;
(iv) du parfum ;
(v) facultativement, un agent de blanchiment ;
(vi) facultativement, une enzyme ; et
(vii) facultativement, un tampon ; et
(b) un conditionnement en film stratifié multicouche biodégradable en milieu marin, dans lequel le conditionnement en film comprend au moins deux couches :
(i) une première couche choisie parmi de la cellulose ou du papier ; et
(ii) une seconde couche choisie parmi du succinate de polybutylène et/ou des copolymères de celui-ci,
dans lequel la première couche et la seconde couche sont stratifiées ensemble,
dans lequel le conditionnement en film stratifié renferme la poudre détergente pour le linge, et
dans lequel la seconde couche est en contact avec la poudre détergente pour le linge.

2. Produit selon la revendication 1, dans lequel le conditionnement en film a une biodégradabilité en milieu marin telle qu'il se décomposera au moins à 60 % dans les 60 jours selon le test de biodégradabilité en milieu marin OCDE 301B.

3. Produit selon l'une quelconque revendication précédente, dans lequel le conditionnement en film comprend un adhésif, et dans lequel la première couche et la seconde couche sont stratifiées ensemble par l'adhésif.

4. Produit selon la revendication 3, dans lequel la seconde couche est choisie parmi du succinate de polybutylène.

5. Produit selon l'une quelconque revendication précédente, dans lequel la première couche a été soumise à un traitement de métallisation.

6. Produit selon l'une quelconque revendication précédente, dans lequel la première couche a été soumise à un traitement de revêtement de vernis.

7. Produit selon l'une quelconque revendication précédente, dans lequel la première couche est choisie parmi de la cellulose.

8. Produit selon l'une quelconque revendication précédente, dans lequel la première couche a été soumise à un traitement d'impression.

9. Produit selon l'une quelconque revendication précédente, dans lequel la première couche est de la cellulose.

10. Produit selon l'une quelconque des revendications 1 à 10, dans lequel la première couche est du papier.

11. Produit selon l'une quelconque revendication précédente, dans lequel le film de conditionnement a un taux de transfert de vapeur humide (TTVH) de 10 g/m²/jour ou moins, dans lequel le procédé de test de TTVH est selon ASTM F1249-13 dans les conditions de test suivantes : la température du gaz de test est de 38 °C (± 0,56 °C) et l'humidité relative est de 90 % (± 3 %), le gaz vecteur est 100 % de N₂ (sec).
